# EUROPÄISCHE PATENTSCHRIFT

(11) **EP 4 194 668 B1**
(45) Veröffentlichungstag und Bekanntmachung des Hinweises auf die Patenterteilung: **21.01.2026**
(21) Anmeldenummer: 22207529.3
(22) Anmeldetag: 15.11.2022
(51) Int. Cl.: F01M 11/06, F16N 13/06, F04C 14/04, F16H 57/04, F01M 11/00, F01M 1/02, F04C 2/14, F04C 2/344

(54) **FLUIDFÖRDERSYSTEM MIT LASTABHÄNGIGER DREHZAHLUMKEHR EINER ROTATIONSPUMPE**
FLUID DELIVERY SYSTEM WITH LOAD-DEPENDENT REVERSAL OF THE ROTATION OF A ROTARY PUMP
SYSTÈME DE TRANSPORT DE FLUIDE AVEC INVERSION DE VITESSE EN FONCTION DE LA CHARGE D'UNE POMPE ROTATIVE

(30) Priorität: 07.12.2021 DE 102021132217
(43) Veröffentlichungstag der Anmeldung: 14.06.2023
(73) Patentinhaber: Schwäbische Hüttenwerke Automotive GmbH, 73433 Aalen (DE)
(72) Erfinder: Peters, Sven, 88427 Bad Schussenried (DE); Jäggle, Gerd, 88521 Ertingen (DE)
(74) Vertreter: SSM Sandmair

(56) Entgegenhaltungen:
- EP-A2- 2 667 053
- EP-A2- 3 093 533
- DE-A1- 102015 220 535
- DE-A1- 102018 007 459
- US-A1- 2013 121 854
- US-A1- 2014 234 124

## Beschreibung

Die Erfindung betrifft ein Fluidfördersystem zur Versorgung eines Maschinenaggregats mit Fluid, insbesondere zur Versorgung eines Motors oder eines Getriebes eines Kraftfahrzeugs. Die Erfindung betrifft insbesondere die Versorgung eines Maschinenaggregats mit Öl zur Schmierung und/oder Kühlung des Maschinenaggregats. Das Fluidfördersystem umfasst ein Reservoir für die Bevorratung des Fluids sowie eine Rotationspumpe, welche das Fluid aus dem Reservoir ansaugt und zu dem Maschinenaggregat fördert.

Klassische Fluidfördersysteme zur Versorgung eines Maschinenaggregats mit Fluid, insbesondere im Kraftfahrzeugbereich zur Versorgung eines Motors oder eines Getriebes mit Fluid, basieren für gewöhnlich auf einer Druckumlaufschmierung, insbesondere einer Nasssumpfschmierung, mit wenigstens einer Pumpe, welche das Fluid, insbesondere Öl, zu den betreffenden Stelle fördert. Bei der klassischen Nasssumpfschmierung wird das Fluid beim Ablaufen von dem Maschinenaggregat in einem Reservoir, welches unterhalb des Maschinenaggregats angeordnet ist, aufgefangen und mittels der Pumpe aus dem Reservoir abgepumpt und dem Maschinenaggregat erneut zugeführt.

Derartige Fluidfördersysteme mit einem Nasssumpf haben den Nachteil, dass sie beispielsweise in extremen Fahrsituationen des Kraftfahrzeugs Luft ansaugen können. So kann beispielsweise eine Kurvenfahrt und/oder ein starkes Beschleunigen oder Bremsmanöver aus hoher Geschwindigkeit des Kraftfahrzeugs dazu führen, dass die entstehenden Fliehkräfte das Öl innerhalb des Reservoirs von der Absaugstelle wegdrücken, sodass an der Absaugstelle neben Öl auch Luft oder ausschließlich Luft angesaugt wird. Dies kann zu einer Unterbrechung der Versorgung des Maschinenaggregats mit Fluid führen und je nach Dauer der Unterbrechung, sowie Temperatur und/oder Zustand des Maschinenaggregats, insbesondere des Motors des Kraftfahrzeugs, fatale Folgen haben. Im schlimmsten Fall kann dies zu einem Motor- und/oder Getriebeschaden eines Kraftfahrzeugs führen.

Daher haben sich Alternativen zu der klassischen Nasssumpfschmierung entwickelt, welche ein Ansaugen von Luft verhindern sollen. Auch sind aus dem Stand der Technik beispielsweise Fluidfördersysteme bekannt, bei welchen das Fluid aus dem Reservoir an mehreren voneinander beabstandeten Absaugstellen durch mehrere Pumpen innerhalb des Reservoirs abgesaugt werden kann. So werden beispielsweise Nasssumpfschmierungen eingesetzt, bei welchen mehrere Pumpen in dem Reservoir verteilt sind, so dass immer wenigstens eine Pumpe Fluid ansaugen und zu dem Maschinenaggregat fördern kann.

Anstelle mehrerer Pumpen, kommt bei der DE 10 2015 220 535 A1 eine einzelne Pumpenvorrichtung mit umkehrbarer Förderrichtung zum Einsatz, welche das Fluid abhängig von der Förderrichtung an einer Absaugstellen ansaugt. Die Förderrichtung wird dabei in Abhängigkeit von Ölstandssensoren zur Erkennung der Verteilung des Öls im Reservoir, insbesondere zur Erkennung ob sich die jeweilige Absaugstelle noch im Betriebsmedium befindet, gesteuert.

Auch sind aus dem Stand der Technik Fluidfördersysteme, insbesondere Nasssumpfschmierungen, bekannt, bei denen das Reservoir sogenannte Ölschwallsperren, insbesondere Schwallbleche oder Schottbleche, umfasst, um zu verhindern, dass das Fluid bei großen Fliehkräften, insbesondere bei hohen Querbeschleunigungen wie sie beispielsweise bei Kurvenfahrten entstehen, von der Absaugstelle weggedrückt wird. Neben den Schottblechen hat es sich bewährt, die Pumpe bzw. die Absaugstelle an einer sehr tiefen Stelle des Reservoirs auszubilden, welche beispielsweise als eine trichterförmige Vertiefung in dem Reservoir ausgebildet ist, so dass auch bei extremen Fahrsituationen möglichst immer genug Fluid im Bereich der Absaugstelle vorhanden ist.

Nachteil der herkömmlichen Nasssumpfschmierung ist, dass diese aufgrund der Ausgestaltung des Reservoirs mit einer Vertiefung unter anderem einen hohen Platzbedarf, insbesondere in der Höhe. Dies führt dazu, dass ein Motor mit integrierter Nasssumpfschmierung relativ weit oben innerhalb des Kraftfahrzeugs verbaut werden muss, um genügend Platz für das Reservoir zur Verfügung zu haben. Daher liegt der Schwerpunkt von Kraftfahrzeugen mit Nasssumpfschmierung relativ weit oben, was sich negativ auf das Fahrverhalten des Kraftfahrzeugs ausüben kann.

Auch können die Schwallbleche beispielsweise bei lang andauernden Kurvenfahrten ein Wegdrücken des Fluids von der Absaugstelle nicht gänzlich verhindern. Zwar kann bei dem Einsatz mehrerer Pumpen auf eine Vertiefung im Reservoir für gewöhnlich verzichtet werden, jedoch ist der Einsatz mehrerer Pumpen unter anderem teuer und hat einen hohen Energiebedarf für den Betrieb der Pumpen.

Als Alternative zu der Nasssumpfschmierung hat sich daher die sogenannte Trockensumpfschmierung entwickelt. Diese kommt insbesondere bei Hochleistungsmotoren und/oder Gelände- oder Sportwägen zum Einsatz. Bei der Trockensumpfschmierung wird das Fluid aus einem Nebensumpf, in welchen das Fluid nach der Versorgung des Maschinenaggregats zurückfließt, mittels einer Pumpe abgesaugt und einem Hauptsumpf zugeführt. Der Hauptsumpf dient wiederum der Versorgung des Maschinenaggregats, indem das Fluid aus dem Hauptsumpf mittels einer weiteren Pumpe abgesaugt und dem Maschinenaggregat zugeführt wird.

Die Trockensumpfschmierung hat den Vorteil, dass sie das Maschinenaggregat zuverlässig schmiert, da sie gegenüber Fliehkräften weniger anfällig ist und die Absaugstelle des Hauptsumpfes aktiv mit Öl versorgt wird. Außerdem kann durch einen großen Hauptsumpf die Kühlwirkung des Fluids verbessert werden und durch einen flachen Nebensumpf, welcher unterhalb des Maschinenaggregats ausgebildet ist, die Bauhöhe des Maschinenaggregats verringert werden, wodurch der Schwerpunkt des Kraftfahrzeugs herabgesetzt werden kann. Letzteres ist insbesondere für flache Kraftfahrzeuge, wie zum Beispiel Sportwägen, von Vorteil. Zudem kann der Hauptsumpf an einer beliebigen Stelle verbaut werden, da das Fluid von dem Maschinenaggregat zunächst in den Nebensumpf abfließt und aktiv zu dem Hauptsumpf gefördert wird.

Diese Art der Druckumlaufschmierung ist zwar in Bezug auf die Versorgung des Maschinenaggregats mit Fluid sehr zuverlässig, sie ist jedoch aufgrund der hohen Anzahl zusätzlicher Bauteile fehleranfällig und vor allem kostenintensiv. So wird für die Trockensumpfschmierung neben einer zusätzlichen Pumpe, welche das Fluid von dem Nebensumpf zu dem Hauptsumpf fördert, ein weiteres Reservoir benötigt. Zudem hat die Trockensumpfschmierung insbesondere auf Grund des Hauptsumpfs in der Regel insgesamt einen höheren Platzbedarf als die Nasssumpfschmierung.

Es ist daher eine Aufgabe der Erfindung, ein Fluidfördersystem bereitzustellen, welches ein Ansaugen von Luft zuverlässig unterbindet, platzsparend und kostengünstig in der Herstellung ist.

Die Aufgabe wird durch ein Fluidfördersystem gemäß Anspruch 1 und ein Verfahren zum Betreiben eines Fluidfördersystems nach Anspruch 13 gelöst.

Das Fluidfördersystem zur Versorgung eines Maschinenaggregats mit Fluid, insbesondere zur Versorgung eines Motors oder eines Getriebes eines Kraftfahrzeugs, umfasst ein Reservoir für die Bevorratung des Fluids. Das Fluidfördersystem ist vorzugsweise eine Druckumlaufschmierung, insbesondere Nasssumpfschmierung. Insbesondere ist das Fluidfördersystem keine Trockensumpfschmierung. Vorzugsweise handelt es sich bei dem Fluidfördersystem um die Nasssumpfschmierung eines Motors eines Kraftfahrzeugs. Bei dem Fluid kann es sich um Öl zur Schmierung und/oder Kühlung des Maschinenaggregats handeln.

Das Reservoir kann flach ausgebildet sein. Insbesondere kann das Reservoir eine Länge aufweisen, die um ein Vielfaches, insbesondere um wenigstens das Doppelte, größer ist als die Breite des Reservoirs. Die Breite und Länge des Reservoirs erstrecken sich vorzugsweise in einem eingebauten Zustand des Reservoirs, insbesondere in einem Kraftfahrzeug, in einer horizontalen Richtung. Vorzugsweise weist das Reservoir eine Tiefe auf, die um ein Vielfaches, insbesondere um die Hälfte, kleiner als die Länge, vorzugsweise als die Breite, des Reservoirs ist. Die Tiefe des Reservoirs erstreckt sich vorzugsweise in dem eingebauten Zustand des Reservoirs, insbesondere in einem Kraftfahrzeug, in einer vertikalen Richtung. Vorzugswese weist das Reservoir in Längs- und Breitenrichtung eine Erstreckung auf, die größer ist als die Tiefe des Reservoirs. Das Reservoir kann insbesondere in Form einer flachen Wanne ausgebildet sein.

Insbesondere kann das Reservoir auf einer dem Maschinenaggregat zugewandten Seite eine Öffnung aufweisen, durch welche das Fluid von dem Maschinenaggregat in das Reservoir zurückgelangen, insbesondere zurückfließen, kann. Das Reservoir kann unterhalb des Maschinenaggregats ausgebildet sein. Insbesondere kann das Reservoir an einem tiefsten Punkt des Maschinenaggregats ausgebildet sein. Das Reservoir kann mit dem Gehäuse des Maschinenaggregats verbunden, insbesondere verschraubt sein. Insbesondere kann das Reservoir ein Teil des Gehäuses des Maschinenaggregats sein.

In bevorzugten Ausführungen handelt es sich bei dem Reservoir um eine Ölwanne eines Kraftfahrzeugs, welche am tiefsten Punkt des Motors des Kraftfahrzeugs angeordnet ist. Insbesondere ist das Reservoir vorzugsweise mit dem Kurbelgehäuse eines Motors eines Kraftfahrzeugs verbunden, insbesondere verschraubt.

Das Reservoir kann aus Metall oder Kunststoff, insbesondere in einem Verfahren der Urformung oder Umformung, hergestellt sein. Vorzugsweise kann das Reservoir durch Umformen, insbesondere durch Tiefziehen, hergestellt sein. In alternativen Ausführungen kann das Reservoir in einem Verfahren der Urformung, insbesondere in einem Gießverfahren, hergestellt sein. In bevorzugten Ausführungen ist das Reservoir durch Tiefziehen aus einem Blech, insbesondere einem Metallblech, hergestellt.

In alternativen Ausführungen kann das Reservoir durch ein Fügeverfahren, insbesondere durch ein thermisches Fügeverfahren, hergestellt sein. So kann das Reservoir beispielsweise aus mehreren miteinander verschweißten Blechen, insbesondere Metallblechen, hergestellt sein. Auch kann das Reservoir einen in einem Verfahren der Ur- oder Umformung hergestellten Grundkörper umfassen, welcher mittels eines Fügeverfahrens mit zusätzlichen Bauteilen, beispielsweise Blechen, einstückig verbunden ist.

Des Weiteren umfasst das Fluidfördersystem eine Rotationspumpe mit einem ersten Pumpenanschluss und einem zweiten Pumpenanschluss. Die Rotationspumpe kann beispielsweise in Form einer Flügelzellenpumpe, Pendelschieberpumpe oder Zahnradpumpe ausgebildet sein. Des Weiteren umfasst das Fluidfördersystem einen Antrieb für die Rotationspumpe. Der Antrieb kann beispielsweise durch einen Elektromotor ausgebildet sein. In alternativen Ausführungen kann die Rotationspumpe durch das Maschinenaggregat, welches mit dem Fluid versorgt werden soll, angetrieben werden, wobei vorzugsweise zwischen dem Maschinenaggregat und der Rotationspumpe ein Getriebe zur Übertragung der Drehzahl und/oder der Drehrichtung angeordnet ist. Das Getriebe kann vorzugsweise so ausgebildet sein, dass es die Förderrichtung der Rotationspumpe unabhängig von der Eingangsdrehrichtung ändern kann.

Die Rotationspumpe kann in einem Normalbetrieb und in einem Alternativbetrieb betrieben werden. In dem Normalbetrieb der Rotationspumpe kann die Rotationspumpe, insbesondere ein Förderglied der Rotationspumpe, in eine erste Förderrichtung drehen und im Alternativbetrieb der Rotationspumpe kann die Rotationspumpe, insbesondere das Förderglied der Rotationspumpe, in eine zweite Förderrichtung drehen. Die zweite Förderrichtung kann der ersten Förderrichtung entgegengesetzt sein. Die Rotationspumpe kann zwischen dem Alternativbetrieb und dem Normalbetrieb wechseln. Insbesondere kann die Förderrichtung der Rotationspumpe gesteuert werden, so dass die Rotationspumpe zwischen dem Normalbetrieb und dem Alternativbetrieb wechseln kann.

Die Rotationspumpe ist dazu ausgelegt, unabhängig von ihrem Betriebszustand Fluid aus dem Reservoir anzusaugen und an das Maschinenaggregat abzugeben. Die Rotationspumpe kann sowohl im Normalbetrieb als auch im Alternativbetrieb Fluid aus dem Reservoir ansaugen. Die Rotationspumpe kann in dem Reservoir angeordnet sein. In alternativen Ausführungen kann die Rotationspumpe außerhalb des Reservoirs angeordnet sein und beispielsweise über Fluidleitungen mit dem Reservoir verbunden sein. Nachdem das Fluid das Maschinenaggregat beispielsweise geschmiert und/oder gekühlt hat, kann das Fluid von dem Maschinenaggregat in das Reservoir zurückfließen. Das Fluidfördersystem stellt somit einen Fluidkreislauf dar.

In Abhängigkeit der Förderrichtung der Rotationspumpe kann der erste Pumpenanschluss einen Einlass, insbesondere einen Gehäuseeinlass, oder einen Auslass, insbesondere einen Gehäuseauslass, der Rotationspumpe bilden. Des Weiteren kann in Abhängigkeit der Förderrichtung der Rotationspumpe der zweite Pumpenanschluss einen Einlass, insbesondere einen Gehäuseeinlass, oder einen Auslass, insbesondere einen Gehäuseauslass, der Rotationspumpe bilden.

In dem Normalbetrieb der Rotationspumpe bildet der erste Pumpenanschluss vorzugsweise den Pumpeneinlass. Insbesondere ist der erste Pumpenanschluss im Normalbetrieb der Rotationspumpe auf einer Niederdruckseite der Rotationspumpe ausgebildet. Entsprechend bildet der zweite Pumpenanschluss im Normalbetrieb der Rotationspumpe vorzugsweise den Pumpenauslass der Rotationspumpe. Insbesondere ist der zweite Pumpenanschluss im Normalbetrieb der Rotationspumpe auf einer Hochdruckseite der Rotationspumpe ausgebildet.

In dem Alternativbetrieb der Rotationspumpe bildet der zweite Pumpenanschluss vorzugsweise den Pumpeneinlass. Insbesondere ist der zweite Pumpenanschluss im Alternativbetrieb der Rotationspumpe auf der Niederdruckseite der Rotationspumpe ausgebildet. Entsprechend bildet der erste Pumpenanschluss im Alternativbetrieb der Rotationspumpe vorzugsweise den Pumpenauslass der Rotationspumpe. Insbesondere ist der erste Pumpenanschluss im Alternativbetrieb der Rotationspumpe auf der Hochdruckseite der Rotationspumpe ausgebildet.

In dem Normalbetrieb der Rotationspumpe kann die Rotationspumpe über den ersten Pumpenanschluss Fluid aus dem Reservoir ansaugen. Des Weiteren kann die Rotationspumpe im Normalbetrieb der Rotationspumpe das Fluid über den zweiten Pumpenanschluss abgeben. In dem Alternativbetrieb der Rotationspumpe kann die Rotationspumpe über den zweiten Pumpenanschluss Fluid aus dem Reservoir ansaugen. Des Weiteren kann die Rotationspumpe im Alternativbetrieb der Rotationspumpe das Fluid über den ersten Pumpenanschluss abgeben.

Das Fluidfördersystem kann eine erste Fluidleitung mit einem ersten Ventil und eine zweite Fluidleitung mit einem zweiten Ventil umfassen. Das Fluidfördersystem kann unabhängig von der Anordnung der Rotationspumpe innerhalb und/oder außerhalb des Reservoirs eine erste Fluidleitung mit einem ersten Ventil und eine zweite Fluidleitung mit einem zweiten Ventil umfassen. Die erste Fluidleitung kann den ersten Pumpenanschluss mit dem Reservoir verbinden, und die zweite Fluidleitung kann den zweiten Pumpenanschluss mit dem Reservoir verbinden. Insbesondere kann sich die erste Fluidleitung von dem ersten Pumpenanschluss bis zu einer ersten Absaugstelle im Reservoir erstrecken. Vorzugsweise verbindet die erste Fluidleitung den ersten Pumpenanschluss über das erste Ventil unmittelbar mit dem Reservoir. Insbesondere kann sich die zweite Fluidleitung von dem zweiten Pumpenanschluss bis zu einer zweiten Absaugstelle im Reservoir erstrecken. Vorzugsweise verbindet die zweite Fluidleitung den zweiten Pumpenanschluss über das zweite Ventil unmittelbar mit dem Reservoir.

In dem Normalbetrieb der Rotationspumpe kann das zweite Ventil den zweiten Pumpenanschluss von dem Reservoir trennen. Insbesondere kann das zweite Ventil die zweite Fluidleitung in dem Normalbetrieb der Rotationspumpe verschließen. Im Alternativbetrieb der Rotationspumpe kann das erste Ventil den ersten Pumpenanschluss von dem Reservoir trennen. Insbesondere kann das erste Ventil die erste Fluidleitung in dem Alternativbetrieb der Rotationspumpe verschließen.

Im Normalbetrieb kann die Rotationspumpe das Fluid über den ersten Pumpenanschluss ansaugen und über den zweiten Pumpenanschluss abgeben. Im Alternativbetrieb der Rotationspumpe kann die Rotationspumpe das Fluid über den zweiten Pumpenanschluss ansaugen und über den ersten Pumpenanschluss abgeben.

Die erste Fluidleitung mündet vorzugsweise an einer ersten Absaugstelle in das Reservoir. Die zweite Fluidleitung mündet vorzugsweise an einer zweiten Absaugstelle in das Reservoir. Die erste Absaugstelle und die zweite Absaugstelle können voneinander beabstandet sein. Insbesondere können die erste Absaugstelle und die zweite Absaugstelle in horizontaler Richtung des Reservoirs, insbesondere in einem eingebauten Zustand des Reservoirs, voneinander beabstandet sein. Vorzugsweise sind die erste Absaugstelle und die zweite Absaugstelle in Längsrichtung des Reservoirs voneinander beabstandet. Die erste Absaugstelle und die zweite Absaugstelle können auf gleicher Höhe in dem Reservoir ausgebildet sein. Insbesondere können die erste Absaugstelle und die zweite Absaugstelle in vertikaler Richtung des Reservoirs, insbesondere in einem eingebauten Zustand des Reservoirs, auf gleicher Höhe sein. In alternativen Ausführungen können die erste Absaugstelle und die zweite Absaugstelle auf unterschiedliche Höhe in dem Reservoir ausgebildet sein. Vorzugsweise sind die erste Absaugstelle und die zweite Absaugstelle örtlich voneinander getrennt in dem Reservoir ausgebildet.

Das erste Ventil ist vorzugsweise zwischen dem ersten Pumpenanschluss und der ersten Absaugstelle ausgebildet. Das erste Ventil kann im Bereich der ersten Absaugstelle ausgebildet sein. Insbesondere kann das erste Ventil an dem dem Reservoir zugewandten Ende der ersten Fluidleitung ausgebildet sein. Das zweite Ventil ist vorzugsweise zwischen dem zweiten Pumpenanschluss und der zweiten Absaugstelle ausgebildet. Das zweite Ventil kann im Bereich der zweiten Absaugstelle ausgebildet sein. Insbesondere kann das zweite Ventil an dem dem Reservoir zugewandten Ende der zweiten Fluidleitung ausgebildet sein.

Das Reservoir kann einen Hauptsumpf und einen Nebensumpf umfassen. Des Weiteren kann das Reservoir einen Überlauf umfassen, über welchen der Hauptsumpf und der Nebensumpf miteinander fluidisch verbunden sind. In bevorzugten Ausführungen fließt das Fluid von dem Maschinenaggregat in den Hauptsumpf zurück. In alternativen Ausführungen kann das Fluid von dem Maschinenaggregat in den Hauptsumpf und den Nebensumpf zurückfließen.

Des Weiteren kann das Fluid über den Überlauf von dem Hauptsumpf in den Nebensumpf und/oder von dem Nebensumpf in den Hauptsumpf fließen. Der Überlauf kann in Form einer Trennwand in dem Reservoir ausgebildet sein, deren Erstreckung in Richtung der Tiefe des Reservoirs kleiner ist als die Tiefe des Reservoirs. In alternativen Ausführungen kann der Überlauf in Form einer Trennwand ausgebildet sein, die wenigstens eine Ausnehmung aufweist, über welche der Hauptsumpf und der Nebensumpf fluidisch verbunden sind.

Der Überlauf dient vorzugsweise als eine Art Schwallblech, welches das Fassungsvolumen des Hauptsumpfes von dem Fassungsvolumen des Nebensumpfes abgrenzt. Durch den Überlauf kann verhindert werden, dass bei auftretenden Querbeschleunigungen, beispielsweise bei einer Kurvenfahrt und/oder einer Beschleunigung oder einer Abbremsung aus hoher Geschwindigkeit, dass gesamte Fluid innerhalb des Reservoirs zu einer Seite des Reservoirs gedrängt wird. Insbesondere kann durch den Überlauf sichergestellt werden, dass nach Beendigung der auftretenden Querkräfte in dem Hauptsumpf und/oder in dem Nebensumpf ausreichend Fluid vorhanden ist, so dass sich die erste Absaugstelle und/oder die zweite Absaugstelle unterhalb des Fluidspiegels innerhalb des Hauptsumpfes bzw. Nebensumpfes befinden/befindet.

Der Hauptsumpf kann im Vergleich zu dem Nebensumpf ein größeres oder kleineres Fassungsvolumen für das Fluid aufweisen. In alternativen Ausführungen können der Hauptsumpf und der Nebensumpf das gleiche Fassungsvolumen für das Fluid aufweisen. Vorzugsweise weisen der Hauptsumpf und der Nebensumpf dieselbe Tiefe auf. In alternativen Ausführungen kann der Hauptsumpf tiefer als der Nebensumpf ausgebildet sein. Auch kann der Nebensumpf tiefer als der Hauptsumpf ausgebildet sein. Der Hauptsumpf und der Nebensumpf können in der Breite dieselbe Erstreckung aufweisen. In alternativen Ausführungen kann der Hauptsumpf in der Breite eine größere Erstreckung als der Nebensumpf aufweisen. Auch kann der Nebensumpf in der Breite eine größere Erstreckung als der Hauptsumpf aufweisen.

Die erste Absaugstelle mündet vorzugsweise in den Hauptsumpf und die zweite Absaugstelle in den Nebensumpf. In alternativen Ausführungen kann die erste Absaugstelle in den Nebensumpf münden und die zweite Absaugstelle in den Hauptsumpf münden.

Des Weiteren kann das Fluidfördersystem eine dritte Fluidleitung mit einem dritten Ventil umfassen. Die dritte Fluidleitung kann den zweiten Pumpenanschluss mit dem Maschinenaggregat verbinden. Des Weiteren kann das Fluidfördersystem eine vierte Fluidleitung mit einem vierten Ventil umfassen. Die vierte Fluidleitung verbindet vorzugsweise den ersten Pumpenanschluss mit dem Maschinenaggregat.

Die dritte Fluidleitung kann an ihrem dem Maschinenaggregat abgewandten Ende in die zweite Fluidleitung münden. Die vierte Fluidleitung kann an ihrem dem Maschinenaggregat abgewandten Ende in die erste Fluidleitung münden.

In alternativen Ausführungen kann die dritte Fluidleitung an ihrem dem Maschinenaggregat abgewandten Ende direkt mit dem zweiten Pumpenanschluss verbunden sein. Auch kann die zweite Fluidleitung an ihrem dem Reservoir abgewandten Ende in die dritte Fluidleitung münden. Das Weiteren kann in alternativen Ausführungen die vierte Fluidleitung an ihrem dem Maschinenaggregat abgewandten Ende mit dem ersten Pumpenanschluss verbunden sein. Auch kann die erste Fluidleitung an ihrem dem Reservoir abgewandten Ende in die vierte Fluidleitung münden. Der erste Pumpenanschluss kann somit sowohl mit der ersten Fluidleitung als auch mit der vierten Fluidleitung direkt verbunden sein. Des Weiteren kann der zweite Pumpenanschluss mit der zweiten Fluidleitung und der dritten Fluidleitung direkt verbunden sein.

Vorzugsweise ist der erste Pumpenanschluss über die erste Fluidleitung mit der vierten Fluidleitung und/oder der zweite Pumpenanschluss über die zweite Fluidleitung mit der dritten Fluidleitung verbunden. Die dritte Fluidleitung kann mit ihrem dem Maschinenaggregat zugewandten Ende in die vierte Fluidleitung münden. Insbesondere kann die dritte Fluidleitung zwischen dem vierten Ventil und dem Maschinenaggregat in die vierte Fluidleitung münden. In alternativen Ausführungen kann die dritte Fluidleitung mit dem Maschinenaggregat verbunden sein, ohne in die vierte Fluidleitung zu münden. Auch kann die vierte Fluidleitung mit ihrem dem Maschinenaggregat zugewandten Ende in die dritte Fluidleitung münden. Insbesondere kann die vierte Fluidleitung zwischen dem dritten Ventil und dem Maschinenaggregat in die dritte Fluidleitung münden. In bevorzugten Ausführungen kann die vierte Fluidleitung mit dem Maschinenaggregat verbunden sein, ohne in die dritte Fluidleitung zu münden.

Das dritte Ventil ist vorzugsweise zwischen dem zweiten Pumpenanschluss und dem Maschinenaggregat ausgebildet. Insbesondere kann das dritte Ventil zwischen der Mündung, mit welcher die dritte Fluidleitung in die zweite Fluidleitung münden kann, und dem Maschinenaggregat ausgebildet sein. Das vierte Ventil ist vorzugsweise zwischen dem ersten Pumpenanschluss und dem Maschinenaggregat ausgebildet. Insbesondere kann das vierte Ventil zwischen der Mündung, mit welcher die vierte Fluidleitung in die erste Fluidleitung münden kann, und dem Maschinenaggregat ausgebildet sein.

Das zweite Ventil ist vorzugsweise zwischen der zweiten Absaugstelle und der Mündung, mit welcher die dritte Fluidleitung in die zweite Fluidleitung münden kann, ausgebildet. Das erste Ventil ist vorzugsweise zwischen der ersten Absaugstelle und der Mündung, mit welcher die vierte Fluidleitung in die erste Fluidleitung münden kann, ausgebildet.

Das dritte Ventil kann im Alternativbetrieb der Rotationspumpe einen Fluidstrom außerhalb einer Förderkammer der Rotationspumpe von dem ersten Pumpenanschluss zu dem zweiten Pumpenanschluss unterbinden. Insbesondere kann das dritte Ventil im Alternativbetrieb der Rotationspumpe die dritte Fluidleitung verschließen. Das vierte Ventil kann im Normalbetrieb der Rotationspumpe einen Fluidstrom außerhalb der Förderkammer der Rotationspumpe von dem zweiten Pumpenanschluss zu dem ersten Pumpenanschluss unterbinden. Insbesondere kann das vierte Ventil die vierte Fluidleitung im Normalbetrieb der Rotationspumpe verschließen.

Das erste Ventil kann eine Freigabestellung und eine Sperrstellung aufweisen. In der Freigabestellung kann das erste Ventil einen Fluidstrom durch das erste Ventil zulassen. Insbesondere kann das erste Ventil in der Freigabestellung einen Fluidstrom durch die erste Fluidleitung von der ersten Absaugstelle zu dem ersten Pumpenanschluss zulassen. In der Sperrstellung kann das erste Ventil einen Fluidstrom durch das erste Ventil unterbinden.

Insbesondere kann das erste Ventil in der Sperrstellung einen Fluidstrom durch die erste Fluidleitung von der ersten Absaugstelle zu dem ersten Pumpenanschluss unterbinden. Das erste Ventil befindet sich im Normalbetrieb der Rotationspumpe vorzugsweise in der Freigabestellung. Das erste Ventil befindet sich im Alternativbetrieb der Rotationspumpe vorzugsweise in der Sperrstellung.

Das zweite Ventil kann eine Freigabestellung und eine Sperrstellung aufweisen. In der Freigabestellung kann das zweite Ventil einen Fluidstrom durch das zweite Ventil zulassen. Insbesondere kann das zweite Ventil in der Freigabestellung einen Fluidstrom durch die zweite Fluidleitung von der zweiten Absaugstelle zu dem zweiten Pumpenanschluss zulassen. In der Sperrstellung kann das zweite Ventil einen Fluidstrom durch das zweite Ventil unterbinden. Insbesondere kann das zweite Ventil in der Sperrstellung einen Fluidstrom durch die zweite Fluidleitung von der zweiten Absaugstelle zu dem zweiten Pumpenanschluss unterbinden. Das zweite Ventil befindet sich im Normalbetrieb der Rotationspumpe vorzugsweise in der Sperrstellung. Das zweite Ventil befindet sich im Alternativbetrieb der Rotationspumpe vorzugsweise in der Freigabestellung.

Das dritte Ventil kann eine Freigabestellung und eine Sperrstellung aufweisen. In der Freigabestellung kann das dritte Ventil einen Fluidstrom durch das dritte Ventil zulassen. Insbesondere kann das dritte Ventil in der Freigabestellung einen Fluidstrom durch die dritte Fluidleitung von der Mündung, mit welcher die dritte Fluidleitung an ihrem dem Maschinenaggregat abgewandten Ende in die zweite Fluidleitung münden kann, bis zu dem Maschinenaggregat, insbesondere bis zu der Mündung, mit welcher die dritte Fluidleitung an ihrem dem Maschinenaggregat zugewandten Ende in die vierte Fluidleitung münden kann, zulassen. In der Sperrstellung kann das dritte Ventil einen Fluidstrom durch das dritte Ventil unterbinden. Insbesondere kann das dritte Ventil in der Sperrstellung einen Fluidstrom durch die dritte Fluidleitung von der Mündung, mit welcher die dritte Fluidleitung an ihrem dem Maschinenaggregat abgewandten Ende in die zweite Fluidleitung münden kann, bis zu dem Maschinenaggregat, insbesondere bis zu der Mündung, mit welcher die dritte Fluidleitung an ihrem dem Maschinenaggregat zugewandten Ende in die vierte Fluidleitung münden kann, unterbinden. Das dritte Ventil befindet sich im Normalbetrieb der Rotationspumpe vorzugsweise in der Freigabestellung. Das dritte Ventil befindet sich im Alternativbetrieb der Rotationspumpe vorzugsweise in der Sperrstellung.

Das vierte Ventil kann eine Freigabestellung und eine Sperrstellung aufweisen. In der Freigabestellung kann das vierte Ventil einen Fluidstrom durch das vierte Ventil zulassen. Insbesondere kann das vierte Ventil in der Freigabestellung einen Fluidstrom durch die vierte Fluidleitung von der Mündung, mit welcher die vierte Fluidleitung an ihrem dem Maschinenaggregat abgewandten Ende in die erste Fluidleitung münden kann, bis zu dem Maschinenaggregat, insbesondere bis zu der Mündung, mit welcher die vierte Fluidleitung an ihrem dem Maschinenaggregat zugewandten Ende in die dritte Fluidleitung münden kann, zulassen. In der Sperrstellung kann das vierte Ventil einen Fluidstrom durch das vierte Ventil unterbinden. Insbesondere kann das vierte Ventil in der Sperrstellung einen Fluidstrom durch die vierte Fluidleitung von der Mündung, mit welcher die vierte Fluidleitung an ihrem dem Maschinenaggregat abgewandten Ende in die erste Fluidleitung münden kann, bis zu dem Maschinenaggregat, insbesondere bis zu der Mündung, mit welcher die vierte Fluidleitung an ihrem dem Maschinenaggregat zugewandten Ende in die dritte Fluidleitung münden kann, unterbinden. Das vierte Ventil befindet sich im Normalbetrieb der Rotationspumpe vorzugsweise in der Sperrstellung. Das vierte Ventil befindet sich im Alternativbetrieb der Rotationspumpe vorzugsweise in der Freigabestellung.

Vorzugsweise befinden sich das zweite Ventil und das vierte Ventil im Normalbetrieb der Rotationspumpe in der Sperrstellung. Vorzugsweise befinden sich das zweite Ventil und das vierte Ventil im Alternativbetrieb der Rotationspumpe in der Freigabestellung. Im Normalbetrieb kann die Rotationspumpe somit vorzugsweise kein Fluid über die zweite Fluidleitung aus dem Reservoir ansaugen und über die vierte Fluidleitung an das Maschinenaggregat abgeben. Im Alternativbetrieb kann die Rotationspumpe somit vorzugsweise Fluid über die zweite Fluidleitung aus dem Reservoir ansaugen und über die vierte Fluidleitung an das Maschinenaggregat abgeben.

Im Alternativbetrieb der Rotationspumpe befinden sich vorzugsweise das erste Ventil und das dritte Ventil in der Sperrstellung. Vorzugsweise befinden sich das erste Ventil und das dritte Ventil im Normalbetrieb der Rotationspumpe in der Freigabestellung. Im Normalbetrieb kann die Rotationspumpe somit vorzugsweise Fluid über die erste Fluidleitung aus dem Reservoir ansaugen und über die dritte Fluidleitung an das Maschinenaggregat abgeben. Im Alternativbetrieb kann die Rotationspumpe somit vorzugsweise kein Fluid über die erste Fluidleitung aus dem Reservoir absaugen und über die dritte Fluidleitung an das Maschinenaggregat abgeben.

Das erste Ventil ist vorzugsweise durch ein Sperrventil gebildet. Insbesondere ist das erste Ventil vorzugsweise durch ein Rückschlagventil gebildet. Im Alternativbetrieb der Rotationspumpe wird dabei der Sperrkörper des ersten Ventils in den Ventilsitz gedrückt. Insbesondere kann der Fluiddruck in der ersten Fluidleitung im Alternativbetrieb der Rotationspumpe dafür sorgen, dass das erste Ventil die Sperrstellung einnimmt. Insbesondere kann der Sperrkörper des ersten Ventils durch den Fluiddruck in der ersten Fluidleitung im Alternativbetrieb der Rotationspumpe in den Ventilsitz gedrückt werden.

Das zweite Ventil ist vorzugsweise durch ein Sperrventil gebildet. Insbesondere ist das zweite Ventil vorzugsweise durch ein Rückschlagventil gebildet. Im Normalbetrieb der Rotationspumpe wird dabei der Sperrkörper des zweiten Ventils in den Ventilsitz gedrückt. Insbesondere kann der Fluiddruck in der zweiten Fluidleitung im Normalbetrieb der Rotationspumpe dafür sorgen, dass das zweite Ventil die Sperrstellung einnimmt. Insbesondere kann der Sperrkörper des zweiten Ventils durch den Fluiddruck in der zweiten Fluidleitung im Normalbetrieb der Rotationspumpe in den Ventilsitz gedrückt werden.

Das dritte Ventil ist vorzugsweise durch ein Sperrventil gebildet. Insbesondere ist das dritte Ventil vorzugsweise durch ein Rückschlagventil gebildet. Im Alternativbetrieb der Rotationspumpe wird dabei der Sperrkörper des dritten Ventils in den Ventilsitz gedrückt. Insbesondere kann der Fluiddruck in der dritten Fluidleitung im Normalbetrieb der Rotationspumpe dafür sorgen, dass das dritte Ventil die Freigabestellung einnimmt. Insbesondere kann der Sperrkörper des dritten Ventils durch den Fluiddruck in der dritten Fluidleitung im Alternativbetrieb der Rotationspumpe in den Ventilsitz gedrückt werden.

Das vierte Ventil ist vorzugsweise durch ein Sperrventil gebildet. Insbesondere ist das vierte Ventil vorzugsweise durch ein Rückschlagventil gebildet. Im Normalbetrieb der Rotationspumpe wird dabei der Sperrkörper des vierten Ventils in den Ventilsitz gedrückt. Insbesondere kann der Fluiddruck in der vierten Fluidleitung im Normalbetrieb der Rotationspumpe dafür sorgen, dass das vierte Ventil die Sperrstellung einnimmt. Insbesondere kann der Sperrkörper des vierten Ventils durch den Fluiddruck in der vierten Fluidleitung im Normalbetrieb der Rotationspumpe in den Ventilsitz gedrückt werden.

Das Fluidfördersystem kann zusätzlich wenigstens eine Filtereinrichtung umfassen. Die Filtereinrichtung filtert das Fluid, vorzugsweise bevor es von der Pumpe zu dem Maschinenaggregat strömt. Alternativ oder zusätzlich kann das Fluidfördersystem eine Filtereinrichtung umfassen, die das Fluid filtert, bevor es von dem Reservoir zu der Pumpe gelangt.

Der Antrieb zum Antreiben der Rotationspumpe ist durch einen Elektromotor gebildet. Das Fluidfördersystem umfasst eine Motorsteuerung zur Ansteuerung des Elektromotors. Die Motorsteuerung umfasst eine Überwachungselektronik. Die Überwachungselektronik der Motorsteuerung ist dazu ausgelegt, zu erkennen, ob die Rotationspumpe Luft angesaugt. Insbesondere ist die Überwachungselektronik dazu ausgelegt, zu erkennen, ob die Rotationspumpe durch die erste und/oder die zweite Fluidleitung Luft ansaugt.

Insbesondere können der Motorsteuerung mehrerer Kennlinien oder Kennfelder zu Grunde gelegt werden, die die Stromaufnahme des Elektromotors in Abhängigkeit der Drehzahl der Rotationspumpe und/oder des Elektromotors in einem normalen Pumpenbetrieb ohne das Ansaugen von Luft enthalten. In den Kennlinien oder Kennfeldern kann zusätzlich der Einfluss der Temperatur des Fluids und/oder der Rotationspumpe auf die Stromaufnahme des Elektromotors, insbesondere in Abhängigkeit der Pumpendrehzahl und/oder der Drehzahl des Elektromotors, erfasst sein. Insbesondere können Schwellenwerte festgelegt sein, welche die Stromaufnahme in Abhängigkeit der Drehzahl der Rotationspumpe und/oder des Elektromotors und/oder einer Temperatur des Fluids und/oder der Rotationspumpe nicht unterschreiten soll.

Die Überwachungselektronik des Fluidfördersystems ist dazu vorgesehen, die Stromaufnahme des Elektromotors in Abhängigkeit einer Ist-Drehzahl der Rotationspumpe und/oder des Elektromotors und/oder einer Ist-Temperatur des Fluids und/oder der Rotationspumpe zu überwachen. Des Weiteren kann die Motorsteuerung bei einem Unterschreiten eines Schwellenwerts der Stromaufnahme in Abhängigkeit der Ist-Drehzahl der Rotationspumpe und/oder des Elektromotors und/oder der Ist-Temperatur des Fluids und/oder der Rotationspumpe die Drehrichtung des Elektromotors ändern.

Insbesondere kann die Motorsteuerung bei einem Unterschreiten des Schwellenwerts der Stromaufnahme in Abhängigkeit der Ist-Drehzahl der Rotationspumpe und/oder des Elektromotors und/oder der Ist-Temperatur des Fluids und/oder der Rotationspumpe die Drehrichtung des Elektromotors für mindestens 1 Sekunde, insbesondere mindestens 5 Sekunden, ändern. In alternativen Ausführungen kann die Motorsteuerung bei einem Unterschreiten des Schwellenwerts der Stromaufnahme in Abhängigkeit der Ist-Drehzahl der Rotationspumpe und/oder des Elektromotors und/oder der Ist-Temperatur des Fluids und/oder der Rotationspumpe die Drehrichtung des Elektromotors so lange ändem, bis der Schwellenwert der Stromaufnahme erneut überschritten wird.

Durch Änderung der Drehrichtung des Elektromotors ändert sich vorzugsweise auch die Drehrichtung der Rotationspumpe. Durch Änderung der Drehrichtung des Elektromotors kann die Rotationspumpe von dem Normalbetrieb in den Alternativbetrieb umschalten und/oder von dem Alternativbetrieb in den Normalbetrieb. Die Motorsteuerung kann somit auch die Rotationspumpe von dem Normalbetrieb in den Alternativbetrieb und/oder von dem Alternativbetrieb in den Normalbetrieb umschalten. Die Drehzahl der Rotationspumpe ist vorzugsweise direkt proportional zu der Drehzahl des Elektromotors. Vorzugsweise ist die Drehzahl der Rotationspumpe gleich der Drehzahl des Elektromotors.

Die Motorsteuerung kann die Ist-Drehzahl der Rotationspumpe und/oder des Elektromotors von Drehzahlmessern erhalten. Des Weiteren kann die Motorsteuerung die Ist-Temperatur des Fluids und/oder der Rotationspumpe von Temperaturmesssonden erhalten. Die Überwachungselektronik kann wenigstens einen Drehzahlmesser zur Bestimmung der Ist-Drehzahl der Rotationspumpe und/oder des Elektromotors umfassen. Des Weiteren kann die Überwachungselektronik kann wenigstens eine Temperaturmesssonde zur Bestimmung der Ist-Temperatur des Fluids und/oder der Rotationspumpe umfassen.

Nachfolgend soll die Funktion des Fluidfördersystems beschrieben werden.

Im Normalbetrieb der Rotationspumpe saugt die Rotationspumpe vorzugsweise Fluid aus dem Reservoir, insbesondere aus dem Hauptsumpf des Reservoirs, über die erste Absaugstelle und die erste Fluidleitung ab. Das erste Ventil der ersten Fluidleitung befindet sich im Normalbetrieb der Rotationspumpe vorzugsweise in der Freigabestellung. Solange sich die Rotationspumpe im Normalbetrieb befindet, wird das angesaugte Fluid vorzugsweise über die dritte Fluidleitung und das dritte Ventil zu dem Maschinenaggregat gefördert.

Kommt es nun zu einem Mangel an Fluid im Bereich der ersten Absaugstelle in dem Reservoir, insbesondere in dem Hauptsumpf des Reservoirs, so dass die erste Absaugstelle nicht mehr vollständig unterhalb des Fluidspiegels liegt, kann neben Fluid auch Luft angesaugt werden. Ein derartiger Mangel an Fluid kann bei einem Kraftfahrzeug beispielsweise bei einer Kurvenfahrt oder einem Brems- oder Beschleunigungsmanöver auftreten, wenn das Fluid durch die erzeugten Fliehkräfte von der Absaugstelle weggedrückt wird. Dies führt insbesondere dazu, dass der Antrieb der Rotationspumpe weniger Leistung aufbringen muss, um die Drehzahl der Rotationspumpe zu halten. Insbesondere für den Fall, dass der Antrieb durch einen Elektromotor gebildet ist, führt dies dazu, dass die Stromaufnahme des Elektromotors abfällt.

Die Motorsteuerung des Elektromotors, insbesondere die Überwachungselektronik, kann das Absinken der Stromaufnahme feststellen und mit einem zu bestimmenden oder festgelegten Schwellenwert der Stromaufnahme in Abhängigkeit der Ist-Drehzahl der Rotationspumpe und/oder des Elektromotors und/oder der Ist-Temperatur des Fluids und/oder der Rotationspumpe vergleichen. Fällt die Stromaufnahme unter den Schwellenwert, kann die Motorsteuerung die Drehrichtung des Elektromotors und somit die Drehrichtung der Rotationspumpe ändern.

In der Folge kann sich die Rotationspumpe im Alternativbetrieb befinden und Fluid über den zweiten Pumpenanschluss, die zweite Fluidleitung und die zweite Absaugstelle aus dem Reservoir, insbesondere aus dem Nebensumpf, ansaugen. Das Fluid kann im Anschluss über den ersten Pumpenanschluss und insbesondere über die vierte Fluidleitung an das Maschinenaggregat abgegeben werden.

Die Erfindung umfasst ferner ein Verfahren zum Betreiben eines Fluidfördersystems zur Versorgung eines Maschinenaggregats mit Fluid. Bei dem Fluidfördersystem handelt es sich vorzugsweise um das voranstehend beschriebene Fluidfördersystem. Das Fluidfördersystem des Verfahrens zum Betreiben eines Fluidfördersystems zur Versorgung eines Maschinenaggregats mit Fluid umfasst vorzugsweise einen im Normalbetrieb in eine erste Drehrichtung drehenden und in einem Alternativbetrieb in eine zweite Drehrichtung drehenden Elektromotor. Der Elektromotor treibt vorzugsweise eine Rotationspumpe an, die in dem Normalbetrieb des Elektromotors das Fluid über einen ersten Pumpenanschluss aus einem Reservoir ansaugt und über einen zweiten Pumpenanschluss abgibt. Ferner saugt die Rotationspumpe in dem Alternativbetrieb des Elektromotors vorzugsweise das Fluid über den zweiten Pumpenanschluss aus dem Reservoir an und gibt das Fluid vorzugsweise über den ersten Pumpenanschluss ab. Die Motorsteuerung umfasst vorzugsweise eine Überwachungselektronik.

Das Verfahren zum Betreiben eines Fluidfördersystems zur Versorgung eines Maschinenaggregats mit Fluid umfasst vorzugsweise folgende Schritte:
Zunächst wird vorzugsweise die Stromaufnahme des Elektromotors erfasst. Dies kann durch die Überwachungselektronik geschehen, welche zu diesem Zweck vorzugsweise ein Strommessgerät umfasst. In einem weiteren Schritt wird vorzugsweise die Ist-Drehzahl der Rotationspumpe und/oder die Ist-Temperatur des Fluids und/oder der Rotationspumpe erfasst. Zum Erfassen der Ist-Drehzahl der Rotationspumpe und/oder der Ist-Temperatur des Fluids und/oder der Rotationspumpe umfasst das Fluidfördersystem vorzugsweise Sensoren, beispielsweise Temperaturmesssonden und/oder Drehzahlmesser. In alternativen Ausführungen kann neben der Ist-Drehzahl der Rotationspumpe auch die Ist-Drehzahl des Elektromotors erfasst werden.

In einem weiteren Schritt wird die Stromaufnahme des Elektromotors vorzugsweise mit einem Schwellenwert für die Stromaufnahme verglichen. Der Schwellenwert kann dabei in Abhängigkeit der erfassten Ist-Drehzahl der Rotationspumpe oder des Elektromotors und/oder die Ist-Temperatur des Fluids und/oder der Rotationspumpe vorgegeben oder bestimmt werden.

Wird der Schwellenwert für die Stromaufnahme des Elektromotors unterschritten, schaltet die Motorsteuerung den Elektromotor vorzugsweise von dem Normalbetrieb in den Alternativbetrieb oder von dem Alternativbetrieb in den Normalbetrieb. In alternativen Ausführungen kann die Motorsteuerung den Elektromotor bei einem Unterschreiten des Schwellenwerts für die Stromaufnahme des Elektromotors für wenigstens 1 Sekunde, insbesondere für wenigstens 5 Sekunden, von dem Normalbetrieb in den Alternativbetrieb umschalten.

Nachfolgend soll die Erfindung anhand von Ausführungsbeispielen beschrieben werden. Die Erfindung wird im Folgenden anhand von Ausführungsbeispielen beschrieben. Die in den Ausführungsbeispielen offenbarten Merkmale bilden den Gegenstand der Ansprüche und der oben beschriebenen Ausführungsformen vorteilhaft weiter.

Es zeigen:
- Figur 1:: einen hydraulischen Schaltplan gemäß einem ersten Ausführungsbeispiel,
- Figur 2:: einen hydraulischen Schaltplan gemäß einem zweiten Ausführungsbeispiel und
- Figur 3:: einen hydraulischen Schaltplan gemäß einem dritten Ausführungsbeispiel.

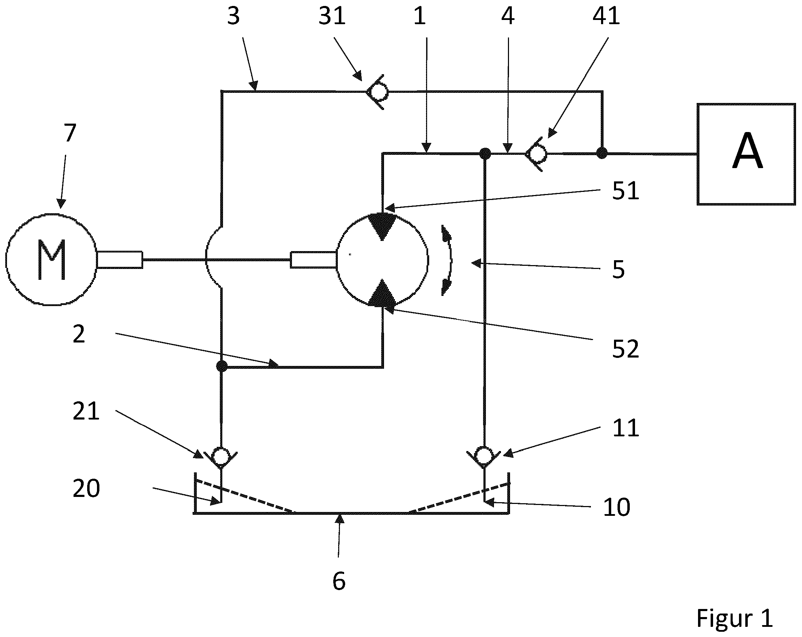

Figur 1 zeigt ein Fluidfördersystem gemäß einem ersten Ausführungsbeispiel. Das Fluidfördersystem umfasst eine Rotationspumpe 5 mit einem ersten Pumpenanschluss 51 und einem zweiten Pumpenanschluss 52. Die Rotationspumpe 5 kann in einem Normalbetrieb, bei welchem die Rotationspumpe 5 in eine erste Drehrichtung dreht, und in einem Alternativbetrieb, bei welchem die Rotationspumpe 5 in eine zweite Drehrichtung dreht, betrieben werden. Des Weiteren umfasst das Fluidfördersystem ein Reservoir 6, aus welchem die Rotationspumpe 5 Fluid ansaugen kann und zu einem Maschinenaggregat A abgeben kann. Bei dem Maschinenaggregat A handelt es sich vorzugsweise um den Motor und/oder das Getriebe eines Kraftfahrzeugs. Nachdem das Fluid das Maschinenaggregat A beispielsweise geschmiert und/oder gekühlt hat, kann das Fluid von dem Maschinenaggregat A in das Reservoir 6 zurückfließen. Das Fluidfördersystem stellt somit einen Fluidkreislauf dar. Das Reservoir 6 ist vorzugsweise, anders als in Figur 1 gezeigt, unter dem Maschinenaggregat A ausgebildet, insbesondere an einem tiefsten Punkt des Maschinenaggregats A, sodass das Fluid aufgrund der Schwerkraft zurück in das Reservoir 6 fließen kann. Insbesondere kann das Reservoir 6 Teil des Maschinenaggregats A sein, beispielsweise kann das Reservoir 6 den unteren Teil eines Aggregatsgehäuses bilden.

Das Reservoir 6 ist vorzugsweise flach ausgebildet. Insbesondere kann das Reservoir 6 in Form einer flachen Wanne ausgebildet sein. Vorzugsweise ist das Reservoir 6 mit dem Gehäuse des Maschinenaggregats A verbunden, insbesondere verschraubt. Das Reservoir 6 kann aus Metall oder Kunststoff, insbesondere in einem Verfahren der Urformung oder Umformung, hergestellt sein. Vorzugsweise kann das Reservoir 6 durch Umformen, insbesondere durch Tiefziehen, aus einem Blech hergestellt sein.

Der erste Pumpenanschluss 51 ist über eine erste Fluidleitung 1 mit dem Reservoir 6 fluidisch verbunden. Die erste Fluidleitung 1 erstreckt sich von dem ersten Pumpenanschluss 51 über ein erste Ventil 11 bis zu einer ersten Absaugstelle 10, welche in dem Reservoir 6 ausgebildet ist. Das erste Ventil 11 ist in Form eines Rückschlagventils, welches eine Freigabestellung und eine Sperrstellung einnehmen kann, ausgebildet. In dem Normalbetrieb der Rotationspumpe 5, bei welchem die Rotationspumpe 5 in eine erste Drehrichtung dreht, befindet sich das erste Ventil 11 in der Freigabestellung und gibt die erste Fluidleitung 1 frei, sodass Fluid aus dem Reservoir 6 von der Rotationspumpe 5 über den ersten Pumpenanschluss 51 angesaugt werden kann. Im Alternativbetrieb der Rotationspumpe 5 befindet sich das erste Ventil 11 in der Sperrstellung, sodass kein Fluid über den ersten Pumpenanschluss 51 und die erste Fluidleitung 1 zu dem Reservoir 6 gelangen kann. Insbesondere sorgt der Fluiddruck in der ersten Fluidleitung 1 im Alternativbetrieb der Rotationspumpe 5 dafür, dass ein Sperrkörper des ersten Ventils 11 in den Ventilsitz gedrückt wird und das erste Ventil 11 verschließt.

Der zweite Pumpenanschluss 52 ist über eine zweite Fluidleitung 2 mit dem Reservoir 6 fluidisch verbunden. Die zweite Fluidleitung 2 erstreckt sich von dem zweiten Pumpenanschluss 52 über ein zweites Ventil 12 bis zu einer zweiten Absaugstelle 20, welche in dem Reservoir 6 ausgebildet ist. Das zweite Ventil 12 ist in Form eines Rückschlagventils, welches eine Freigabestellung und eine Sperrstellung einnehmen kann, ausgebildet. In dem Alternativbetrieb der Rotationspumpe 5, bei welchem die Rotationspumpe 5 in eine zweite Drehrichtung dreht, befindet sich das zweite Ventil 12 in seiner Freigabestellung und gibt die zweite Fluidleitung 2 frei, sodass Fluid aus dem Reservoir 6 von der Rotationspumpe 5 über den zweiten Pumpenanschluss 52 angesaugt werden kann. In dem Normalbetrieb der Rotationspumpe 5 befindet sich das zweite Ventil 12 in der Sperrstellung, sodass kein Fluid über den zweiten Pumpenanschluss 52 und die zweite Fluidleitung 2 zu dem Reservoir 6 gelangen kann. Insbesondere sorgt der Fluiddruck in der zweiten Fluidleitung 2 im Normalbetrieb der Rotationspumpe 5 dafür, dass ein Sperrkörper des zweiten Ventils 12 in den Ventilsitz gedrückt wird und das zweite Ventil 12 verschließt.

Der erste Pumpenanschluss 51 ist über eine vierte Fluidleitung 4 mit einem vierten Ventil 41 mit dem Maschinenaggregat A verbunden. Die vierte Fluidleitung 4 mündet mit ihrem dem Maschinenaggregat A abgewandten Ende in die erste Fluidleitung 1. Das vierte Ventil 41 ist zwischen dem Maschinenaggregat A und der Mündung, mit welcher die vierte Fluidleitung 4 mit ihrem dem Maschinenaggregat A abgewandten Ende in die erste Fluidleitung 1 mündet, angeordnet.

Das vierte Ventil 41 ist in Form eines Rückschlagventils mit einer Freigabestellung, in welcher das vierte Ventil 41 die vierte Fluidleitung 4 freigibt, und einer Sperrstellung, in welcher das vierte Ventil 41 die vierte Ventilleitung 4 verschließt, ausgebildet. In der Freigabestellung des vierten Ventils 41 kann Fluid von dem ersten Pumpenanschluss 51 über die vierte Ventilleitung 4, und insbesondere über die erste Fluidleitung 1, zu dem Maschinenaggregat A gelangen. Das vierte Ventil 41 befindet sich im Alternativbetrieb der Rotationspumpe 5 in der Freigabestellung und in dem Normalbetrieb der Rotationspumpe 5 in der Sperrstellung. Insbesondere sorgt der Fluiddruck in der ersten Fluidleitung 1 und der vierten Fluidleitung 4 dafür, dass ein Sperrkörper des vierten Ventils 41 im Alternativbetrieb der Rotationspumpe aus dem Ventilsitz gedrückt wird, sodass das vierte Ventil 41 seine Freigabestellung einnimmt. Insbesondere kann das vierte Ventil 41 im Normalbetrieb der Rotationspumpe 5 einen Fluidstrom außerhalb der Förderkammer der Rotationspumpe 5 von dem zweiten Pumpenanschluss 52 zu dem ersten Pumpenanschluss 51 unterbinden, sodass Fluid von dem zweiten Pumpenanschluss 52 ausschließlich durch die Förderkammer zu dem ersten Pumpenanschluss 51 gelangen kann.

Der zweite Pumpenanschluss 52 ist über eine dritte Fluidleitung 3 mit einem dritten Ventil 31 mit dem Maschinenaggregat verbunden. Die dritte Fluidleitung 3 mündet mit ihrem dem Maschinenaggregat abgewandten Ende in die zweite Fluidleitung 2. Des Weiteren mündet die dritte Fluidleitung 3 mit ihrem dem Maschinenaggregat zugewandten Ende in die vierte Fluidleitung 4. Das dritte Ventil 31 ist zwischen der Mündung, mit welcher die dritte Fluidleitung 3 mit ihrem dem Maschinenaggregat abgewandten Ende in die zweite Fluidleitung 2 mündet, und der Mündung, mit welcher die dritte Fluidleitung 3 mit ihrem dem Maschinenaggregat zugewandten Ende in die vierte Fluidleitung 4 mündet, ausgebildet.

Das dritte Ventil 31 ist in Form eines Rückschlagventils, welches eine Freigabestellung und eine Sperrstellung einnehmen kann, ausgebildet. In der Freigabestellung des dritten Ventils 31 kann Fluid von dem zweiten Pumpenanschluss 52 über die dritte Fluidleitung 3, insbesondere über die zweite Fluidleitung 2 und die dritte Fluidleitung 3, zu dem Maschinenaggregat A gelangen. Das dritte Ventil 31 befindet sich im Normalbetrieb der Rotationspumpe 5 in der Freigabestellung und in dem Alternativbetrieb der Rotationspumpe 5 in der Sperrstellung. Insbesondere sorgt der Fluiddruck in der dritten Fluidleitung 3 im Normalbetrieb der Rotationspumpe 5 dafür, dass ein Sperrkörper des dritten Ventils 31 aus dem Ventilsitz gedrückt wird, sodass das dritte Ventil 31 seine Freigabestellung einnimmt. Insbesondere kann das dritte Ventil 31 im Alternativbetrieb der Rotationspumpe 5 einen Fluidstrom außerhalb der Förderkammer der Rotationspumpe 5 von dem ersten Pumpenanschluss 51 zu dem zweiten Pumpenanschluss 52 unterbinden, sodass Fluid von dem ersten Pumpenanschluss 51 zu dem zweiten Pumpenanschluss 52 ausschließlich durch die Förderkammer gelangen kann.

Die Rotationspumpe 5 wird von einem Elektromotor 7 angetrieben. Das Fluidfördersystem umfasst eine Motorsteuerung zur Ansteuerung des Elektromotors 7. Die Motorsteuerung umfasst vorzugsweise eine Überwachungselektronik, welche dazu ausgelegt ist, zu erkennen, ob die Rotationspumpe 5 über eine der Absaugstellen 10, 20 Luft ansaugt. Die Überwachungselektronik des Fluidfördersystems ist dazu vorgesehen, die Stromaufnahme des Elektromotors 7 in Abhängigkeit einer Ist-Drehzahl der Rotationspumpe 5 und/oder des Elektromotors 7 sowie in Abhängigkeit der Temperatur der Rotationspumpe 5 oder des Fluids zu überwachen. Sinkt die Stromaufnahme unter einen zu bestimmenden oder festgelegten Schwellenwert, wird die Drehrichtung des Elektromotors 7 und somit die Drehrichtung der Rotationspumpe 5 geändert. D. h. bei Absinken der Stromaufnahme unter einen Schwellenwert schaltet die Motorsteuerung den Elektromotor 7 und damit die Rotationspumpe 5 von dem Normalbetrieb in den Alternativbetrieb.

Die Motorsteuerung kann die Drehrichtung des Elektromotors 7 für mindestens 1 Sekunde, insbesondere mindestens 5 Sekunden ändern, oder sie belässt die Drehrichtung des Elektromotors 7, bis der Schwellenwert der Stromaufnahme in Abhängigkeit der Ist-Drehzahl der Rotationspumpe 5 und/oder der Ist-Temperatur des Fluids und/oder der Rotationspumpe 5 erneut unter einen Schwellenwert sinkt.

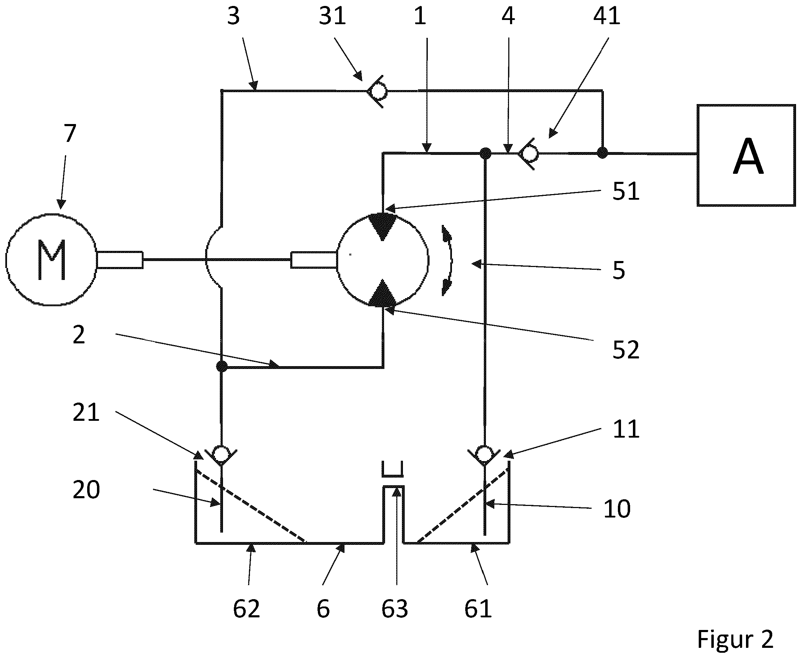

Figur 2 zeigt ein Fluidfördersystem gemäß einem zweiten Ausführungsbeispiel. Das Fluidfördersystem gemäß Figur 2 unterscheidet sich von dem Fluidfördersystem gemäß Figur 1 nur in der Ausgestaltung des Reservoirs 6. Daher soll im Folgenden nur auf die Unterschiede zwischen den beiden Ausführungsbeispielen eingegangen werden. Merkmale des ersten Ausführungsbeispiels aus Figur 1 und deren Beschreibung gelten, sofern sie nicht im Widerspruch zu dem Ausführungsbeispiel nach Figur 2 stehen, auch für das zweite Ausführungsbeispiel.

Das Reservoir 6 aus Figur 2 unterscheidet sich von dem Reservoir 6 aus Figur 1 dahingehend, dass das Reservoir in einen Hauptsumpf 61 und einen Nebensumpf 62 unterteilt ist. Der Hauptsumpf 61 und der Nebensumpf 62 sind über einen Überlauf 63 fluidisch miteinander verbunden. Im Betrieb des Fluidfördersystems fließt das Fluid von dem Maschinenaggregat A vorzugsweise in den Hauptsumpf 61 zurück und wird dort über die erste Absaugstelle 10 von der Rotationspumpe 5 im Normalbetrieb abgesaugt und an das Maschinenaggregat A abgegeben. Der Überlauf 63 ist in Form einer Trennwand des Reservoirs 6 ausgebildet, wobei sich die Trennwand in Richtung der Tiefe des Reservoirs 6 weniger weit erstreckt als das Reservoir 6.

Im Alternativbetrieb der Rotationspumpe 5 saugt die Rotationspumpe 5 das Fluid aus dem Nebensumpf 62 über die Absaugstelle 20 ab. Ist das Fluidfördersystem als Fluidfördersystem für einen Motor und/oder ein Getriebe eines Kraftfahrzeugs vorgesehen, so kann bei auf das fluidwirkenden Fliehkräften das Fluid über den Überlauf 63 von dem Hauptsumpf 61 zu dem Nebensumpf 62 und/oder von dem Nebensumpf 62 zu dem Hauptsumpf 61 fließen.

Wird das Fluid wie in Figur 2 durch eine gestrichelte Linie im Nebensumpf 62 dargestellt auf die linke Seite des Reservoirs 6 gedrückt, kann es vorkommen, dass die Absaugstelle 10 oberhalb des Fluidspiegels im Hauptsumpf 61 liegt. Dadurch sinkt im Normalbetrieb der Rotationspumpe 5 die Stromaufnahme des Elektromotors 7 und die Motorsteuerung schaltet den Elektromotor 7, falls der Schwellenwert für die Stromaufnahme unterschritten wird, von dem Normalbetrieb in den Alternativbetrieb.

Der Überlauf 63 stellt dabei sicher, dass bei Wegfall der Fliehkräfte auf das Fluid und insbesondere beim automatischen Zurückschalten der Motorsteuerung von dem Alternativbetrieb zu dem Normalbetrieb ausreichend Fluid in dem Hauptsumpf 61 zurückbleibt, sodass die erste Absaugstelle 10 unterhalb des Fluidspiegels in dem Hauptsumpf 61 ist.

Der Hauptsumpf 61 hat gemäß dem Ausführungsbeispiel aus Figur 2 ein kleineres Fassungsvolumen als der Nebensumpf 62. In alternativen Ausführungen können der Hauptsumpf 61 und der Nebensumpf 62 das gleiche Fassungsvolumen aufweisen oder der Nebensumpf 62 kann ein kleineres Fassungsvolumen als der Hauptsumpf 61 aufweisen.

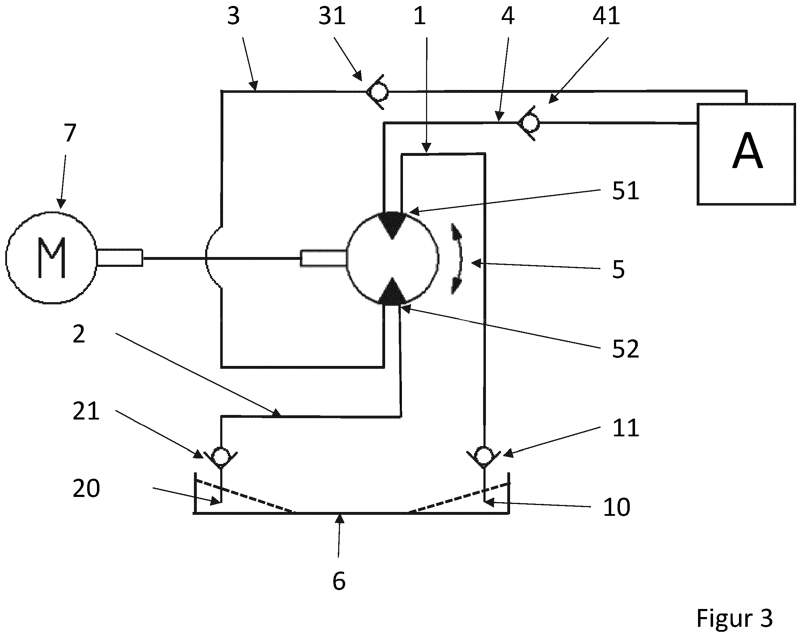

Das Ausführungsbeispiel gemäß Figur 3 unterscheidet sich von den Ausführungsbeispielen der Figuren 1 und 2 in der Ausgestaltung der Fluidleitungen. Daher soll im Folgenden nur auf die wesentlichen Unterschiede zwischen dem dritten Ausführungsbeispiel und den beiden vorangegangenen Ausführungsbeispielen eingegangen werden. Merkmale des ersten Ausführungsbeispiels und des zweiten Ausführungsbeispiels und deren Beschreibung gelten, sofern sie nicht im Widerspruch zu dem Ausführungsbeispiel nach Figur 3 stehen, auch für das dritte Ausführungsbeispiel.

Im Gegensatz zu den beiden vorangegangenen Ausführungsbeispielen mündet die vierte Fluidleitung 4 mit ihrem dem Maschinenaggregat A abgewandten Ende nicht in die erste Fluidleitung 1. Die vierte Fluidleitung 4 erstreckt sich vom ersten Pumpenanschluss 51 bis zum Maschinenaggregat A. Die erste Fluidleitung 1 erstreckt sich vom ersten Pumpenanschluss 51 über das erste Ventil 11 bis zur ersten Absaugstelle 10. Der erste Pumpenanschluss 51 ist somit sowohl mit der ersten Fluidleitung 1 als auch mit der vierten Fluidleitung 4 verbunden, insbesondere direkt verbunden.

Des Weiteren mündet die dritte Fluidleitung 3 mit ihrem dem Maschinenaggregat A abgewandten Ende nicht in die zweite Fluidleitung 2. Zudem mündet die dritte Fluidleitung 3 mit ihrem dem Maschinenaggregat A zugewandten Ende nicht in die vierte Fluidleitung 4. Die dritte Fluidleitung 3 erstreckt sich somit von dem zweiten Pumpenanschluss 52 bis zu dem Maschinenaggregat A. Die zweite Fluidleitung 2 erstreckt sich von dem zweiten Pumpenanschluss 52 über das zweite Ventil 21 bis zur zweiten Absaugstelle 20. Der zweite Pumpenanschluss 52 ist somit sowohl mit der dritten Fluidleitung 3 als auch mit der zweiten Fluidleitung 2 verbunden, insbesondere direkt verbunden.

## Patentansprüche

1. Fluidfördersystem zur Versorgung eines Maschinenaggregats (A) mit Fluid, insbesondere zur Versorgung eines Motors oder eines Getriebes eines Kraftfahrzeugs, wobei das Fluidfördersystem Folgendes umfasst:
a) ein Reservoir (6) für die Bevorratung des Fluids,
b) eine Rotationspumpe (5) mit einem ersten Pumpenanschluss (51) und einem zweiten Pumpenanschluss (52),
c) einen Antrieb (7) zum Antreiben der Pumpe (5),
d) eine erste Fluidleitung (1) mit einem ersten Ventil (11) und eine zweite Fluidleitung (2) mit einem zweiten Ventil (21),
e) wobei die erste Fluidleitung (1) den ersten Pumpenanschluss (51) mit dem Reservoir (6) verbindet und die zweite Fluidleitung (2) den zweiten Pumpenanschluss (52) mit dem Reservoir (6) verbindet und
f) die Rotationspumpe (5) in einem Normalbetrieb, in welchem die Rotationspumpe (5) in eine erste Förderrichtung dreht, und einem Alternativbetrieb, in welchem die Rotationspumpe (5) in eine zweite Förderrichtung dreht, betreibbar ist, wobei
g) im Alternativbetrieb der Rotationspumpe (5) das erste Ventil (11) den ersten Pumpenanschluss (51) von dem Reservoir (6) trennt und im Normalbetrieb der Rotationspumpe (5) das zweite Ventil (21) den zweiten Pumpenanschluss (52) von dem Reservoir (6) trennt,
h) wobei der Antrieb (7) einen Elektromotor aufweist, und das Fluidfördersystem eine Motorsteuerung zur Ansteuerung des Elektromotors umfasst, und
i) wobei die Motorsteuerung eine Überwachungselektronik zur Erkennung von Luftansaugung umfasst,
**dadurch gekennzeichnet, dass**
j) die Überwachungselektronik dazu vorgesehen ist, eine Stromaufnahme des Elektromotors (7) in Abhängigkeit einer Ist-Drehzahl der Rotationspumpe (5) und/oder des Elektromotors (7) und/oder einer Ist-Temperatur des Fluids und/oder der Rotationspumpe (5) zu überwachen.

2. Fluidfördersystem nach dem vorhergehenden Anspruch, wobei die Rotationspumpe (5) im Normalbetrieb das Fluid über den ersten Pumpenanschluss (51) ansaugt und über den zweiten Pumpenanschluss (52) abgibt und die Rotationspumpe (5) im Alternativbetrieb das Fluid über den zweiten Pumpenanschluss (52) ansaugt und über den ersten Pumpenanschluss (51) abgibt.

3. Fluidfördersystem nach einem der vorhergehenden Ansprüche, **dadurch gekennzeichnet, dass** die erste Fluidleitung (1) an einer ersten Absaugstelle (10) in das Reservoir (6) mündet und die zweite Fluidleitung (2) an einer zweiten Absaugstelle (20) in das Reservoir (6) mündet, wobei die erste Absaugstelle (10) und die zweite Absaugstelle (20) voneinander beabstandet sind.

4. Fluidfördersystem nach einem der vorhergehenden Ansprüche, **dadurch gekennzeichnet, dass** das Reservoir (6) einen Hauptsumpf (61), einen Nebensumpf (62) und einen Überlauf (63) umfasst, wobei das Fluid von dem Maschinenaggregat (A) in den Hauptsumpf (61) zurückfließt und der Hauptsumpf (61) mit dem Nebensumpf (62) über den Überlauf (63) fluidisch verbunden ist.

5. Fluidfördersystem nach Anspruch 4 in Kombination mit Anspruch 3, wobei die erste Absaugstelle (10) in den Hauptsumpf (61) und die zweite Absaugstelle (20) in den Nebensumpf (62) mündet.

6. Fluidfördersystem nach einem der vorhergehenden Ansprüche, **gekennzeichnet durch** eine dritte Fluidleitung (3) mit einem dritten Ventil (31), die den zweiten Pumpenanschluss (52) mit dem Maschinenaggregat (A) verbindet, und eine vierte Fluidleitung (4) mit einem vierten Ventil (41), die den ersten Pumpenanschluss (51) mit dem Maschinenaggregat (A) verbindet.

7. Fluidfördersystem nach dem vorhergehenden Anspruch, wobei die dritte Fluidleitung (3) an ihrem dem Maschinenaggregat (A) abgewandten Ende in die zweite Fluidleitung (2) und die vierte Fluidleitung (4) an ihrem dem Maschinenaggregat (A) abgewandten Ende in die erste Fluidleitung (1) mündet.

8. Fluidfördersystem nach einem der beiden vorhergehenden Ansprüche, wobei das dritte Ventil (31) im Alternativbetrieb der Rotationspumpe (5) einen Fluidstrom außerhalb einer Förderkammer der Rotationspumpe (5) von dem ersten Pumpenanschluss (51) zu dem zweiten Pumpenanschluss (52) unterbindet und das vierte Ventil (41) im Normalbetrieb der Rotationspumpe (5) einen Fluidstrom außerhalb der Förderkammer der Rotationspumpe (5) von dem zweiten Pumpenanschluss (52) zu dem ersten Pumpenanschluss (51) unterbindet.

9. Fluidfördersystem nach einem der vorhergehenden Ansprüche, wobei sowohl das erste Ventil (11) als auch das zweite Ventil (21) durch ein Sperrventil, insbesondere Rückschlagventil, gebildet sind und wobei vorzugsweise sowohl das dritte Ventil (31) als auch das vierte Ventil (41) nach einem der Ansprüche 6 bis 8 durch ein Sperrventil, insbesondere Rückschlagventil, gebildet sind.

10. Fluidfördersystem nach einem der vorhergehenden Ansprüche, wobei die Überwachungselektronik zur Erkennung von Luftansaugung durch die erste und/oder zweite Fluidleitung dient.

11. Fluidfördersystem nach einem der vorhergehenden Ansprüche, wobei die Motorsteuerung bei einem Unterschreiten eines Schwellenwerts der Stromaufnahme in Abhängigkeit der Ist-Drehzahl der Rotationspumpe (5) und/oder des Elektromotors (7) und/oder der Ist-Temperatur des Fluids und/oder der Rotationspumpe (5) die Drehrichtung des Elektromotors (7) ändert.

12. Fluidfördersystem nach einem der vorhergehenden Ansprüche, wobei die Motorsteuerung bei einem Unterschreiten eines Schwellenwerts der Stromaufnahme in Abhängigkeit der Ist-Drehzahl der Rotationspumpe (5) und/oder des Elektromotors (7) und/oder der Ist-Temperatur des Fluids und/oder der Rotationspumpe (5) die Drehrichtung des Elektromotors (7) für mindestens eine Sekunde, insbesondere mindestens 5 Sekunden, ändert.

13. Verfahren zum Betreiben eines Fluidfördersystems zur Versorgung eines Maschinenaggregats (A) mit Fluid, vorzugsweise des Fluidfördersystems nach einem der Ansprüche 1 bis 12 mit einem im Normalbetrieb in eine erste Drehrichtung drehenden und in einem Alternativbetrieb in eine zweite Drehrichtung drehenden Elektromotor (7), einer über den Elektromotor (7) angetriebenen Rotationspumpe (5), die in dem Normalbetrieb des Elektromotors (7) das Fluid über einen ersten Pumpenanschluss (51) aus einem Reservoir (6) ansaugt und über einen zweiten Pumpenanschluss (52) abgibt und in dem Alternativbetrieb des Elektromotors (7) das Fluid über den zweiten Pumpenanschluss (52) aus dem Reservoir (6) ansaugt und über den ersten Pumpenanschluss (51) abgibt, und einer Motorsteuerung mit einer Überwachungselektronik, wobei das Verfahren folgende Schritte umfasst:
a) Erfassen einer Stromaufnahme des Elektromotors (7),
b) Erfassen einer Ist-Drehzahl der Rotationspumpe (5) und/oder einer Ist-Temperatur des Fluids und/oder der Rotationspumpe (5),
c) Vergleichen der Stromaufnahme mit einem Schwellenwert für die Stromaufnahme, wobei der Schwellenwert in Abhängigkeit der erfassten Ist-Drehzahl und/oder der erfassten Ist-Temperatur des Fluids und/oder der Rotationspumpe (5) vorgegeben oder bestimmt wird,
d) Umschalten des Elektromotors (7) bei einem Unterschreiten des Schwellenwerts für die Stromaufnahme von dem Normalbetrieb in den Alternativbetrieb oder von dem Alternativbetrieb in den Normalbetrieb durch die Motorsteuerung.

## Claims

1. A fluid delivery system for supplying fluid to a machine assembly (A), in particular an engine or gear system of a motor vehicle, the fluid delivery system comprising:
a) a reservoir (6) for storing the fluid;
b) a rotary pump (5) having a first pump port (51) and a second pump port (52);
c) a drive (7) for driving the pump (5); and
d) a first fluid conduit (1) featuring a first valve (11) and a second fluid conduit (2) featuring a second valve (21),
e) wherein the first fluid conduit (1) connects the first pump port (51) to the reservoir (6), and the second fluid conduit (2) connects the second pump port (52) to the reservoir (6), and
f) the rotary pump (5) can be operated in a normal mode, in which it rotates in a first delivery direction, and an alternative mode in which it rotates in a second delivery direction, wherein
g) the first valve (11) separates the first pump port (51) from the reservoir (6) when the rotary pump (5) is in its alternative mode, and the second valve (21) separates the second pump port (52) from the reservoir (6) when the rotary pump (5) is in its normal mode,
h) wherein the drive (7) comprises an electric motor, and the fluid delivery system comprises a motor controller for actuating the electric motor, and
i) wherein the motor controller comprises monitoring electronics for detecting that air is being suctioned,
**characterised in that**
j) the monitoring electronics are provided to monitor a power consumption of the electric motor (7) as a function of an actual rotational speed of the rotary pump (5) and/or electric motor (7) and/or an actual temperature of the fluid and/or rotary pump (5).

2. The fluid delivery system according to the preceding claim, wherein when it is in its normal mode, the rotary pump (5) suctions the fluid via the first pump port (51) and discharges it via the second pump port (52), and when the rotary pump (5) is in its alternative mode, it suctions the fluid via the second pump port (52) and discharges it via the first pump port (51).

3. The fluid delivery system according to any one of the preceding claims, **characterised in that** the first fluid conduit (1) emerges into the reservoir (6) at a first aspiration point (10), and the second fluid conduit (2) emerges into the reservoir (6) at a second aspiration point (20), wherein the first aspiration point (10) and the second aspiration point (20) are spaced apart from each other.

4. The fluid delivery system according to any one of the preceding claims, **characterised in that** the reservoir (6) comprises a main sump (61), an ancillary sump (62) and an overflow (63), wherein the fluid flows from the machine assembly (A) back to the main sump (61), and the main sump (61) is fluidically connected to the ancillary sump (62) via the overflow (63).

5. The fluid delivery system according to claim 4 in conjunction with claim 3, wherein the first aspiration point (10) emerges into the main sump (61) and the second aspiration point (20) emerges into the ancillary sump (62).

6. The fluid delivery system according to any one of the preceding claims, **characterised by** a third fluid conduit (3) which features a third valve (31) and connects the second pump port (52) to the machine assembly (A), and a fourth fluid conduit (4) which features a fourth valve (41) and connects the first pump port (51) to the machine assembly (A).

7. The fluid delivery system according to the preceding claim, wherein the third fluid conduit (3) emerges into the second fluid conduit (2) at its end which faces away from the machine assembly (A), and the fourth fluid conduit (4) emerges into the first fluid conduit (1) at its end which faces away from the machine assembly (A).

8. The fluid delivery system according to any one of the preceding two claims, wherein when the rotary pump (5) is in its alternative mode, the third valve (31) prevents a fluid flow outside a delivery chamber of the rotary pump (5) from the first pump port (51) to the second pump port (52), and when the rotary pump (5) is in its normal mode, the fourth valve (41) prevents a fluid flow outside the delivery chamber of the rotary pump (5) from the second pump port (52) to the first pump port (51).

9. The fluid delivery system according to any one of the preceding claims, wherein both the first valve (11) and the second valve (21) are formed by a check valve, in particular a reflux valve, and wherein both the third valve (31) and the fourth valve (41) according to any one of claims 6 to 8 are preferably formed by a check valve, in particular a reflux valve.

10. The fluid delivery system according to any one of the preceding claims, wherein the monitoring electronics serve to detect that air is being suctioned through the first and/or second fluid conduit.

11. The fluid delivery system according to any one of the preceding claims, wherein the motor controller changes the rotational direction of the electric motor (7) when the power consumption as a function of the actual rotational speed of the rotary pump (5) and/or electric motor (7) and/or the actual temperature of the fluid and/or rotary pump (5) falls below a threshold value.

12. The fluid delivery system according to any one of the preceding claims, wherein the motor controller changes the rotational direction of the electric motor (7) for at least one second, in particular at least five seconds, when the power consumption as a function of the actual rotational speed of the rotary pump (5) and/or electric motor (7) and/or the actual temperature of the fluid and/or rotary pump (5) falls below a threshold value.

13. A method for operating a fluid delivery system for supplying fluid to a machine assembly (A), preferably the fluid delivery system according to any one of claims 1 to 12, comprising an electric motor (7) which rotates in a first rotational direction when it is in a normal mode and in a second rotational direction when it is in an alternative mode, a rotary pump (5) which is driven by the electric motor (7) and suctions the fluid from a reservoir (6) via a first pump port (51) and discharges it via a second pump port (52) when the electric motor (7) is in its normal mode and suctions the fluid from the reservoir (6) via the second pump port (52) and discharges it via the first pump port (51) when the electric motor (7) is in its alternative mode, and a motor controller comprising monitoring electronics, the method comprising the following steps:
a) a power consumption of the electric motor (7) is detected;
b) an actual rotational speed of the rotary pump (5) and/or an actual temperature of the fluid and/or rotary pump (5) is detected;
c) the power consumption is compared with a threshold value for the power consumption, wherein the threshold value is predetermined or determined as a function of the detected actual rotational speed and/or the detected actual temperature of the fluid and/or rotary pump (5);
d) the motor controller switches the electric motor (7) from its normal mode to its alternative mode or from its alternative mode to its normal mode, if the power consumption falls below the threshold value.

## Revendications

1. Système de refoulement de fluide pour alimenter un ensemble mécanique (A) en fluide, en particulier pour alimenter un moteur ou une transmission d'un véhicule automobile, le système de refoulement de fluide comprenant :
a) un réservoir (6) pour stocker le fluide ;
b) une pompe rotative (5) comportant un premier raccord de pompe (51) et un second raccord de pompe (52) ;
c) un entraînement (7) pour entraîner la pompe (5) ; et
d) une première conduite de fluide (1) comportant une première soupape (11) et une deuxième conduite de fluide (2) comportant une deuxième soupape (21),
e) la première conduite de fluide (1) reliant le premier raccord de pompe (51) au réservoir (6), et la deuxième conduite de fluide (2) reliant le second raccord de pompe (52) au réservoir (6),
f) la pompe rotative (5) pouvant fonctionner en mode normal, dans lequel la pompe rotative (5) tourne en première direction de refoulement, et en mode alternatif, dans lequel la pompe rotative (5) tourne en seconde direction de refoulement,
g) la première soupape (11) séparant le premier raccord de pompe (51) du réservoir (6) lorsque la pompe rotative (5) est en mode alternatif, et la deuxième soupape (21) séparant le second raccord de pompe (52) du réservoir (6) lorsque la pompe rotative (5) est en mode normal,
h) l'entraînement (7) présentant un moteur électrique, et le système de refoulement de fluide comprenant une commande de moteur pour piloter le moteur électrique, et
i) la commande de moteur comprenant une électronique de surveillance pour détecter l'aspiration d'air,
**caractérisé en ce que**
j) l'électronique de surveillance est prévue pour surveiller une consommation de courant du moteur électrique (7) en fonction d'une vitesse de rotation réelle de la pompe rotative (5) et / ou du moteur électrique (7) et / ou en fonction de la température réelle du fluide et / ou de la pompe rotative (5).

2. Système de refoulement de fluide selon la revendication précédente, dans lequel la pompe rotative (5) en mode normal aspire le fluide via le premier raccord de pompe (51) et le distribue via le second raccord de pompe (52), et la pompe rotative (5) en mode alternatif aspire le fluide via le second raccord de pompe (52) et le distribue via le premier raccord de pompe (51).

3. Système de refoulement de fluide selon l'une quelconque des revendications précédentes, **caractérisé en ce que** la première conduite de fluide (1) débouche dans le réservoir (6) à un premier point d'aspiration (10) et la deuxième conduite de fluide (2) débouche dans le réservoir (6) à un second point d'aspiration (20), le premier point d'aspiration (10) et le second point d'aspiration (20) étant à distance l'un de l'autre.

4. Système de refoulement de fluide selon l'une quelconque des revendications précédentes, **caractérisé en ce que** le réservoir (6) comprend un puisard principal (61), un puisard secondaire (62) et un déversoir (63), le fluide refluant depuis l'ensemble mécanique (A) dans le puisard principal (61), le puisard principal (61) étant relié fluidiquement au puisard secondaire (62) via le déversoir (63).

5. Système de refoulement de fluide selon la revendication 4 en combinaison avec la revendication 3, dans lequel le premier point d'aspiration (10) débouche dans le puisard principal (61) et le second point d'aspiration (20) débouche dans le puisard secondaire (62).

6. Système de refoulement de fluide selon l'une quelconque des revendications précédentes, **caractérisé par** une troisième conduite de fluide (3) comportant une troisième soupape (31) reliant le second raccord de pompe (52) à l'ensemble mécanique (A) et par une quatrième conduite de fluide (4) comportant une quatrième soupape (41) reliant le premier raccord de pompe (51) à l'ensemble mécanique (A).

7. Système de refoulement de fluide selon la revendication précédente, dans lequel la troisième conduite de fluide (3) débouche dans la deuxième conduite de fluide (2) à son extrémité opposée à l'ensemble mécanique (A), et la quatrième conduite de fluide (4) débouche dans la première conduite de fluide (1) à son extrémité opposée à l'ensemble mécanique (A).

8. Système de refoulement de fluide selon l'une quelconque des deux revendications précédentes, dans lequel la troisième soupape (31) empêche un écoulement de fluide hors d'une chambre de refoulement de la pompe rotative (5) depuis le premier raccord de pompe (51) vers le second raccord de pompe (52) lorsque la pompe rotative (5) est en mode alternatif, et la quatrième soupape (41) empêche un écoulement de fluide hors de la chambre de refoulement de la pompe rotative (5) depuis le second raccord de pompe (52) vers le premier raccord de pompe (51) lorsque la pompe rotative (5) est en mode normal.

9. Système de refoulement de fluide selon l'une quelconque des revendications précédentes, dans lequel aussi bien la première soupape (11) et la deuxième soupape (21) sont formées par une soupape d'arrêt, en particulier un clapet anti-retour, et aussi bien la troisième soupape (31) et la quatrième soupape (41) selon l'une quelconque des revendications 6 à 8 sont de préférence formées par une soupape d'arrêt, en particulier un clapet anti-retour.

10. Système de refoulement de fluide selon l'une quelconque des revendications précédentes, dans lequel l'électronique de surveillance sert à détecter l'aspiration d'air à travers la première conduite de fluide et / ou la deuxième conduite de fluide.

11. Système de refoulement de fluide selon l'une quelconque des revendications précédentes, dans lequel la commande de moteur modifie la direction de rotation du moteur électrique (7) lors d'un sous-dépassement d'une valeur seuil de la consommation de courant en fonction de la vitesse de rotation réelle de la pompe rotative (5) et / ou du moteur électrique (7) et / ou en fonction de la température réelle du fluide et / ou de la pompe rotative (5).

12. Système de refoulement de fluide selon l'une quelconque des revendications précédentes, dans lequel la commande de moteur modifie la direction de rotation du moteur électrique (7) pendant au moins une seconde, en particulier pendant au moins 5 secondes, lors d'un sous-dépassement d'une valeur seuil de la consommation de courant en fonction de la vitesse de rotation réelle de la pompe rotative (5) et / ou du moteur électrique (7) et / ou en fonction de la température réelle du fluide et / ou de la pompe rotative (5).

13. Procédé pour faire fonctionner un système de refoulement de fluide pour alimenter un ensemble mécanique (A) en fluide, de préférence le système de refoulement de fluide selon l'une quelconque des revendications 1 à 12, comportant un moteur électrique (7) tournant en première direction de rotation en mode normal et en seconde direction de rotation en mode alternatif, une pompe rotative (5) entraînée par l'intermédiaire du moteur électrique (7), ladite pompe rotative (5) aspirant le fluide depuis un réservoir (6) via un premier raccord de pompe (51) et le distribuant via un second raccord de pompe (52) lorsque le moteur électrique (7) est en mode normal et aspirant le fluide depuis le réservoir (6) via le second raccord de pompe (52) et le distribuant via le premier raccord de pompe (51) lorsque le moteur électrique (7) est en mode alternatif, et une commande de moteur comportant une électronique de surveillance, le procédé comprenant les étapes suivantes :
a) la détection d'une consommation de courant du moteur électrique (7) ;
b) la détection d'une vitesse de rotation réelle de la pompe rotative (5) et / ou d'une température réelle du fluide et / ou de la pompe rotative (5) ;
c) la comparaison de la consommation de courant avec une valeur seuil de la consommation de courant, la valeur seuil étant prédéfinie ou déterminée en fonction de la vitesse de rotation réelle détectée et / ou de la température réelle détectée du fluide et / ou de la pompe rotative (5) ;
d) la commutation du moteur électrique (7) du mode normal au mode alternatif ou du mode alternatif au mode normal par la commande de moteur lors d'un sous-dépassement de la valeur seuil de la consommation de courant.
